# EUROPEAN PATENT SPECIFICATION

(11) **EP 1 383 397 B1**
(45) Date of publication and mention of the grant of the patent: **10.02.2010**
(21) Application number: 01985884.4
(22) Date of filing: 12.12.2001
(51) Int. Cl.: A23L 1/227

(54) **FLAVOUR CONCENTRATES**
AROMAKONZENTRATE
CONCENTRES D'AROME

(30) Priority: 20.12.2000 GB 0031137
(43) Date of publication of application: 28.01.2004
(73) Proprietor: Société des Produits Nestlé S.A., 1800 Vevey (CH)
(72) Inventor: HANSEN, Carl, Erik, CH-1066 Epalinges (CH); KOCHHAR, Sunil, CH-1073 Savigny (CH); JUILLERAT, Marcel, Alexandre, CH-1000 Lausanne (CH); BUDWIG, Christopher, Dublin, OH 43017 (US); SPADONE, Jean-Claude, CH-1814 La Tour-De-Peilz (CH)
(74) Representative: Ducreux, Marie
(86) International application number: PCT/EP2001/014775
(87) International publication number: WO 2002/049452

(56) References cited:
- EP-A- 0 087 769
- DD-B- 205 815
- GB-A- 1 223 796
- US-A- 2 887 388
- US-A- 4 701 335
- US-A- 5 676 993
- DATABASE WPI Section Ch, Derwent Publications Ltd., London, GB; Class D13, AN 1973-43995U XP002206330 & JP 48 025508 B (TAKASAGO PERFUMERY CO LTD)
- SHAW J J; BURRIS D; HO C-T: "Responce Surface Methodology in Flavor Research - Reaction of Rhamnose and Proline" PREFUMER & FLAVORIST, vol. 15, no. 2, 1990, pages 60, 62-66, XP001088505 cited in the application

## Description

The present invention relates to a process for the preparation of flavour concentrates and their use in the preparation of chocolate. As used herein, the term chocolate also includes chocolate materials generally referred to as compound and ice cream coatings.

It is well known that there are a large number of different flavour attributes associated with chocolate. Among these are cocoa, dairy, roasted, sweet, bitter, fruity, malt, caramel and biscuit/cookie attributes. In particular, caramel and biscuit/cookie are attributes, that are highly desirable in certain chocolate products.

Caramel and biscuit flavour generation has been described in many model reaction systems. 4-hydroxy-2,5-dimethyl-3(2H)-furanone (corresponding to Furaneol a registered trademark of Firmenich Inc.) is one compound associated with caramel flavour. 4-hydroxy-2,5-dimethyl-3(2H)-furanone can be produced in high levels from 6-deoxy-hexoses such as rhamnose (6-deoxy-L-mannose), fucose (6-deoxy-L-galactose) and 6-deoxy-fructose by reaction with an amine (Wong et al. 1983, J Org Chem 48:3493-3497; Whitehead 1998, Food Technology Feb 52:40-46). Specifically, 4-hydroxy-2,5-dimethyl-3(2H)-furanone can be generated from a rhamnose and amine interaction by Amadori formation via the loss of an amine group, forming 2,3-enolization leading to a diketone, which leads to 4-hydroxy-2,5-dimethyl-3(2H)-furanone after dehydration and cyclization (Pisarnitskii et al. 1992, Appl Biochem Microbiol 28:97-100). At basic pH, 4-hydroxy-2,5-dimethyl-3(2H)-furanone can be generated from rhamnose alone, whereas under acidic conditions formation is only found in presence of an amino acid (e.g. arginine). The combination of rhamnose and arginine results in 4-hydroxy-2,5-dimethyl-3(2H)-furanone formation, which is 40-50 fold higher than any other sugar-amine combination (Haleva-Toledo et al. 1997, J Agric Food Chem 45:1314-1319; 1999, J Agric Food Chem 47:4140-4145). Maximum 4-hydroxy-2,5-dimethyl-3(2H)-furanone generation is found at pH 8.0 with increasing temperature (90 °C) in aqueous buffers. Lower amount of 4-hydroxy-2,5-dimethyl-3(2H)-furanone can also be generated during base-catalyzed fructose degradation (Shaw et al. 1968, J Agric Food Chem 16:979-982).

Proline as flavour precursor has been extensively studied in combination with reducing sugars in water or ethanol model Maillard reaction systems. Among the compounds generated from proline and rhamnose are 4-hydroxy-2,5-dimethyl-3(2H)-furanone and several 2,3-dihydro-(1H)-pyrrolizines (Shaw and Ho 1989, Thermal generation of aromas, eds. Parliament TH, McGorrin RJ, Ho C-T, American Chemical Society, Washington, DC.; Shaw et al. 1990, Perfumer & Flavorist 15:60-66; Tressl et al. 1985, J Agric Food Chem 33:919-923 and J Agric Food Chem 33:934-928). As 4-hydroxy-2,5-dimethyl-3(2H)-furanone is thermally unstable, its concentration is strongly reduced at temperatures higher than 150°C in model aqueous reaction systems. The biscuit/bready/roast flavour attributes have also been studied in many model systems. Proline was described by Hodge et al. (1972, Cereal Sci Today 17:34-40) as the key amino acid precursor for roast aroma. It was further shown by Schieberle (1990, Z Lebensm Unters Forsch 191:206-209) that a key impact compound, 2-acetyl-1-pyrroline was generated from proline and ornithine. In US-A-3687692 and US-A-3782973 it was reported that proline-based reaction mixtures produced a caramel character upon heating with cyclic ketones. US 4,022,920 disclosed that Amadori rearrangement compounds have been produced from proline and 6-deoxy-aldohexoses such as rhamnose under reflux in ethanol followed by drying. The dried mixture was incorporated into a food matrix followed by heating.

US 4,949,592 is directed to a process wherein rhamnose is mixed with amino acids such as Phe, Ala and Leu in water or propylene glycol, coated onto uncooked foodstuff followed by microwave radiation. US 5,041,296 also disclosed flavour precursors treated by microwave radiation before mixing with a foodstuff. In both these US patents it is stated that oils were not useful as solvents since the reactants were not soluble. EP 0 398 417 B1 also disclosed reactions between rhamnose and proline in other non-fat systems such as water, ethanol, propylene glycol and glycerol.

US 4701335 disclosed that butter-like concentrate is developed by mild heating of butterfat, milk protein and sugars such as lactose, glucose and arabinose. The butter-like concentrate contained at least 6-fold and 2-fold increased level of 5-hydroxymethyl-furfural and maltol, respectively, and were used in bakery products. In US 3,663,236 there is disclosed a butter flavoured composition that has been produced with buttermilk, sugars, vegetable fat and 24-35% of water. US 4,347,258 discloses that milk powders have been reacted with butter fat in presence of 30-80% water to produce a stable food product.

Many attempts have been made to increase the level of flavour precursors in chocolate flavour reactions. For example, US-A-2,887,388 and US-A-2,835,592 disclosed processes for the production of artificial chocolate flavour by reacting reducing sugars and protein hydrolysates of com, wheat, hemp, soy, rye, oats, peanut, barley, animal and fish proteins. Another approach, to enhance cocoa flavour was to increase the free amino acid pool. US-A-5, 676,993 disclosed a process for enhancing cocoa flavour by roasting a combination of amino acids and reducing sugars in fat matrixes such as cocoa nibs (soaking), cocoa liquor or cocoa butter. According to US-A-5,676,993 cocoa flavour is enhanced in the fat matrix by adding hydrophobic free amino acids such as phenylalanine, leucine, tyrosine, arginine, valine and/or isoleucine and reducing sugar, such as glucose, fructose, arabinose or mixtures thereof.

Thus, an object of the present invention is to prepare flavour concentrates for use in chocolate to give a caramel and/or biscuit/cookie flavour.

According to one aspect of the present invention there is provided a process for the production of flavour concentrates comprising the addition of a mixture of flavour precursors comprising proline, ornithine or protein hydrolysate (flavour precursors A), and rhamnose, fucose or fructose (flavour precursors B), to a fat-based medium and heating the mixture to about 100-140°C for about 10-120 minutes to form a flavour concentrate.

Preferably, the reaction is performed at 125 °C for 30 minutes. The concentration of the flavour precursors may be about 5-250 mM, preferably about 50 mM. The fat-based medium is anhydrous milk fat or lipase hydrolysed milk fat.

Preferably, the flavour precursors are proline, rhamnose and fructose. Other combinations of flavour precursors include fucose and ornithine. Milk or vegetable protein hydrolysates may be used, and are prepared from milk powder, casein, whey, soy, wheat, cotton, peanut, rice or pea protein isolates or concentrates.

Preferably, the flavour reactions may be performed by the following processes:
i) The fat-based media is heated and the flavour precursors (A) and (B) are dispersed in the melted fat-based medium and reacted under reflux at 125 °C. This preferably occurs under agitation. In this process, the flavour precursors are added directly in the fat-based medium without any addition of moisture.
ii) The flavour precursors A and B may also be dissolved in alkaline water solution, buffer at pH 5.0 - 8.0 or 5-50% potassium carbonate solution to form a flavour precursor solution or suspension which is then added at less than 1.5% level (w/w) to the melted fat and reacted with agitation under reflux at 125 °C. Preferably, pH of the mixture before the reaction is 8.0.
iii) The flavour precursors A and B may also be dissolved in alkaline water solution, buffer pH 5.0 - 8.0 or 5-50% potassium carbonate solution. The flavour precursor solution or suspension generated is added at 1.5-5% level (w/w) to the melted fat-based medium, the reaction mixture thus obtained is heated under agitation for 10-20 minutes from 100 °C to 125 °C, without closing the vessel to evaporate most of the moisture, and the remaining 10-20 minutes of the reaction is performed at 125°C under agitation and reflux. Preferably, the total reaction time is about 30 minutes. Preferably, pH of the mixture before reaction is 8.0.

The use of a fat-based reaction system ensures the following results:
i) Compatibility of the flavour concentrate for incorporation into chocolate products. For example anhydrous milk fat is compatible with chocolate and many compound coatings and cocoa butter is compatible with chocolate. However, propylenglycol (PG) and glycerol increase the viscosity of both chocolate and compound coatings which will hinder optimal depositing and enrobing for confectionery applications and dipping in ice-cream coating applications.
ii) An increased stability of labile compounds. Furthermore, during heating of milk fat, flavour active compounds such as methyl ketones, lactones and short chain fatty acids are present or might be generated to further increase the quality of the reaction mixture. PG, glycerol or waterbased reaction flavours have however not been proven useful for incorporation into chocolate.
iii) The use of fat as a solvent allows temperatures in excess of 100°C at ambient pressure to be used.
iv) The uniqueness of the flavour concentrate is obtained by the use of a fat-based reaction.

Preferably, rhamnose and proline flavour precursors were used which were dissolved in 5% buffer (100 mM Na-phosphate pH 8.0) and added to the heated fat-based medium, preferably anhydrous milk fat. The reaction mixture was heated for 10 minutes from 100 °C to 125 °C without closing the reactor to evaporate most of the water. The remaining 20 minutes of the reaction was performed at 125°C under reflux in the fat-based medium. This process allows maximum 4-hydroxy-2,5-dimethyl-3(2H)-furanone concentration to be obtained. Thus, the present invention has surprisingly positive results in the generation of caramel and biscuit flavour using fat-based media as compared to classical aqueous systems.

Proline was used as amine flavour precursor, as proline is a precursor for caramel as well as biscuit/bread/roast type aroma volatiles. The reaction between proline and rhamnose in a fat-based medium produces a range of flavour active compounds. 4-hydroxy-2,5-dimethyl-3(2H)-furanone and 2-acetyl-1-pyrroline which are involved in caramel and biscuit/bread/roast flavour respectively, were used as chemical markers in the described invention. 4-hydroxy-2,5-dimethyl-3(2H)-furanone was the major compound in most of the reaction flavour products. The rich and balanced flavour was most likely achieved by a mixture of several compounds generated in the reaction. Examples of other compounds in the reaction mixture were 3-hydroxy 2-butanone (acetoine), 1-hydroxy 2-propanone (acetol), 5-methyl furfural, 2-hydroxy 3-methyl 2-cyclopenten-1-one (corylone) and 4-acetoxy 2,5-dimethyl-3(2H)-furanone. Surprisingly, it was found that proline resulted in the highest level of 4-hydroxy-2,5-dimethyl-3(2H)-furanone accumulation in fat-based reaction systems. However, the aroma of the flavour concentrates may not be linked or limited to any of the compounds mentioned.

Addition of 5% buffer, pH 8.0 facilitated improved flavour precursor solubility and subsequent high 4-hydroxy-2,5-dimethyl-3(2H)-furanone generation and intense caramel flavour of the fat mixture. However, reduction of the aqueous phase to, for example, 1.5% can be beneficial to avoid the first stage of the reaction including moisture evaporation. It is possible to perform the reaction without any addition of aqueous solution along with the flavour precursors. In particular, this method is preferred in order to stabilize certain aroma compounds directly in the fat phase.

All fat-based reactions with rhamnose resulted in intense caramel and biscuit/cookie flavour. Reactions with fructose, which is a cheaper sugar flavour precursor, resulted in substantially lower amount of 4-hydroxy-2,5-dimethyl-3(2H)-furanone. The 4-hydroxy-2,5-dimethyl-3(2H)-furanone level as well as the caramel flavour could be increased by increasing the ratio of fructose to proline. Reactions in anhydrous milk fat with 50 mM proline and 100 mM fructose resulted in a further increase in 4-hydroxy-2,5-dimethyl-3(2H)-furanone level and a strong caramel and biscuit/cookie flavour. Thus, fructose and proline can also be used as flavour precursor combination in fat-based flavour reaction.

A still further aspect of this invention is directed to the use of the flavour concentrates obtainable by the process as described above in the manufacture of chocolate (including compound) using 0.01-5%, preferably 0.5% by weight of the flavour concentrate, based on the weight of the total chocolate. Preferably, the flavour concentrate is incorporated directly into the chocolate. As the flavour concentrate is generated directly in chocolate compatible ingredients, no drying or extraction is necessary before incorporation into the chocolate mass. These flavour concentrates impart caramel and/or cookie/biscuit note in the chocolate. The flavour concentrate can be added alone or in combination with other flavours.

According to a yet further aspect of the present invention there is provided a chocolate product obtainable by the process as described above with modified flavour characteristics comprising the flavour concentrate as described above. Such chocolate products include milk, dark and white chocolate as well as compound coatings for use for example in bars or ice-cream coatings.

The invention will now be described in more detail with reference to the following nonlimiting examples:

The following methods and recipes were used in the experiments

Volatile analyses were carried out using SPME (solid-phase micro-extraction) combined with gas-mass spectrometry. Sensory evaluation of the flavour concentrates, chocolate and compound was carried out by a panel of 6-9 trained tasters.

The chocolate used in the following experiments was prepared by standard chocolate processing methods according to the following general formula and procedure. The white chocolate comprised crystal sugar (40-55%), cocoa butter (20-26%), skimmed milk, powder (16-25%), milk fat (6-10%) and soya lecithin (0.1-0.5%). The milk chocolate used in the following experiments comprised cocoa butter (15-22%), sugar (40-55%), cocoa liquor (10-18%), milk fat (4-7%) and skimmed milk powder (10-15%).

White chocolate confectionery compound coating used in the following experiments comprised crystal sugar (25-60%), confectionery coating fat (24-40%), milk powder (5-25%), vanillin (0.01-0.1%) and soya lecithin (0.01-0.5%). Milk chocolate confectionery compound coating comprised crystal sugar (25-60%), confectionery coating fat (24-40%), milk powder (5-25%), cocoa powder (3-20%), vanillin (0.01-0.1%) and soya lecithin (0.01-0.5%). White chocolate compound ice-cream coatings comprised crystal sugar (30-40%), coating fat (34-54%), milk powder (18-30%), soya lecithin (0.2-1.1%) and vanillin (0.01-0.06%). Milk chocolate compound ice-cream coating comprised crystal sugar (25-40%), coating fat (34-54%), milk powder (4-19%), cocoa powder (3-13%), soya lecithin (0.2-1.1%) and vanillin (0.01-0.06%).

### Example 1:

The flavour reactions were performed in a round bottom 3-necked stirred reactor with temperature control. Anhydrous milk fat (80g) was melted in the reactor and heated to 125°C. The flavour precursors, rhamnose (50 mM) and proline (50 mM), were added directly with the milk fat or added separately when the temperature of the milk fat had reached 125 °C. Rhamnose and proline were reacted in the milk fat for 60 min at 125 °C under reflux. The reacted material was allowed to cool to room temperature and stored at 4°C or room temperature. The flavours were incorporated at 0.5% level of addition into a chocolate mass.

### Incorporation into compound:

One gram of the reaction flavour was added to 199 grams of completely melted compound mass, thoroughly mixed by hand, and molded into 20 gram bars. Following cooling, bars were demolded and allowed to equilibrate to room temperature for at least 4 hours. The samples were allowed to equilibrate at 15 °C for 1-30 days before tasting.

### Incorporation into white and milk chocolate:

One gram of the reaction flavour was added to 199 grams of completely melted chocolate mass and mixed manually at 50 °C to homogenize the sample, followed by precrystallization and molding into 5 g bars. Following cooling, bars were demolded and allowed to equilibrate to room temperature for at least 4 hours. The samples were allowed to equilibrate at 15 °C for 1-30 days before tasting.

The chocolate samples were evaluated by blind tasting with 6-9 trained panellists. All samples were compared to the reference chocolate mass without any incorporation. Incorporation of the fat-based flavour resulted in strong enhancement of attributes such as caramel, biscuit, and cookie in the chocolate mass.

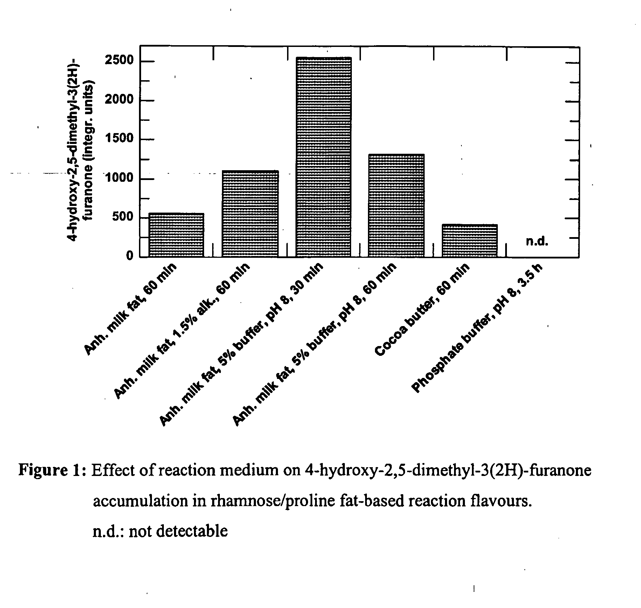

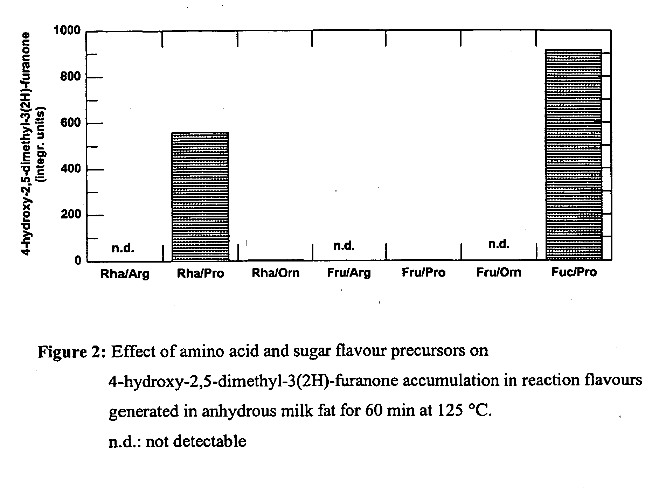

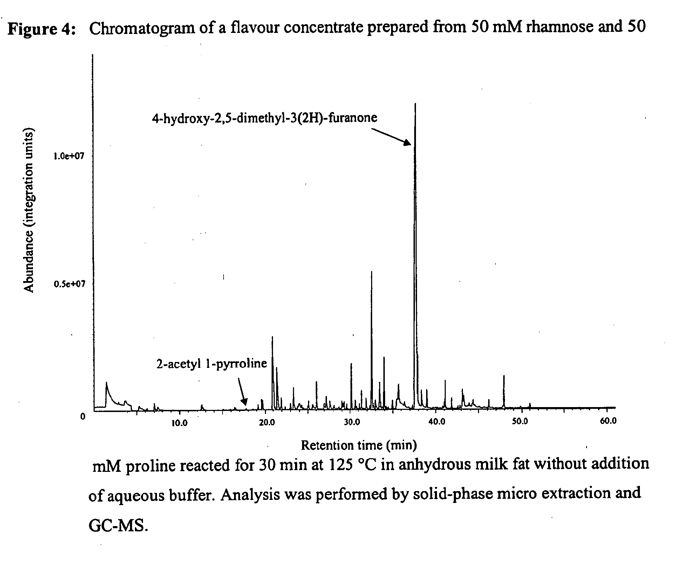

Volatile analysis of the flavour concentrates was carried out using solid-phase micro-extraction (SPME) combined with gas chromatography-mass spectrometry. The generation of 4-hydroxy-2,5-dimethyl-3(2H)-furanone and 2-acetyl-1-pyrroline was selected as chemical markers for caramel and biscuit flavour development, respectively (Figure 4). 4-hydroxy-2,5-dimethyl-3(2H)-furanone was the major peak in the chromatogram. 2-acetyl-1-pyrroline was also identified in the reaction mixture. It is clearly shown in Figure 1 that reactions in fat-systems facilitates high accumulation of 4-hydroxy-2,5-dimethyl-3(2H)-furanone. It is furthermore shown that proline as flavour precursor facilitates 4-hydroxy-2,5-dimethyl-3(2H)-furanone accumulation as compared to arginine (Figure 2).

### Example 2

A flavour reaction was performed according to example 1, except that 1.5% of alkaline water (Stock solution: 4 drops of 50% NaOH in 20 ml water) was added along with the rhamnose and proline. This approach facilitated the reactions at basic pH and increases the solubility of the precursors. Incorporation of 0.5% of the fat-based flavour into chocolate, as described in example 1, resulted in attributes such as caramel, biscuit and cookie. Strongest caramel flavour was achieved after 30 min of reaction.

### Example 3:

A flavour reaction was performed according to example 1, except that the rhamnose and proline flavour precursors were dissolved in 100 mM Na-phosphate buffer, pH 8.0 and added when the milk fat had reached a temperature of 100 °C. This approach facilitated the reactions at basic pH and increases the solubility of the precursors. The mixture was heated without closing the reactor until most of the moisture had evaporated and the product temperature had reached 125 °C. The reaction was continued under reflux at 125 °C. Total reaction time was 30-60 min. Incorporation of 0.5% of the fat-based flavour into chocolate, as described in example 1, resulted in attributes such as caramel, biscuit and cookie. Strongest caramel flavour was achieved after 30 min of reaction. The strong caramel flavour was correlated to high 4-hydroxy-2,5-dimethyl-3(2H)-furanone level (Figure 1)

### Example 4

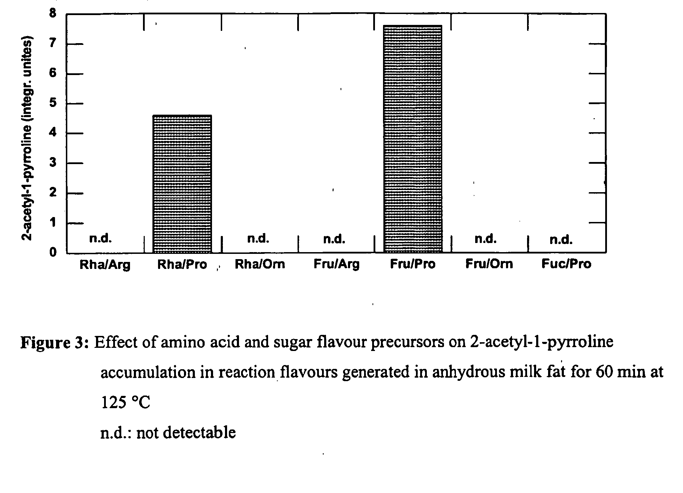

A flavour reaction was performed according to example 1, except that the flavour precursors were 50 mM fructose and 50 mM proline. Incorporation of 0.5% of the fat-based flavour into chocolate resulted in attributes such as caramel and biscuit. Strongest biscuit flavour was achieved after 60 min of reaction. Fructose/proline reaction in anhydrous milk fat resulted in the highest accumulation of 2-acetyl-1-pyrroline (Figure 3). The level of 4-hydroxy-2,5-dimethyl-3(2H)-furanone was lower as compared to reactions with rhamnose (Figure 2).

### Example 5

A flavour reaction was performed according to example 4, except that the flavour precursors were 100 mM fructose and 50 mM proline. Incorporation of 0.5% of the fat-based flavour into chocolate resulted in attributes such as caramel, cookie and biscuit. The caramel attribute was enhanced by increasing the fructose concentration from 50 to 100 mM.

### Example 6:

A flavour reaction was performed according to example 4, except that the flavour precursors were 1% fructose and 1% casein hydrolysate. The casein hydrolysate was prepared by standard techniques using Flavourzyme 1000 L (fungal protease/peptidase mixture from Novo Nordisk, Denmark). Hydrolysis was performed at 50°C using 1% enzyme by weight of protein content to achieve approximately 50% degree of hydrolysis. Incorporation of 0.5% of the fat-based flavour into chocolate resulted in an increase in the caramel attribute.

### Example 7

Ornithine, which is a well known precursor of biscuit/bread/baked impact compounds was also reacted in the milk fat system. A flavour reaction was performed according to example 2, except that the flavour precursors were 50 mM rhamnose and 50 mM ornithine. Incorporation of 1.0 % of the fat-based flavour into chocolate resulted in an increase in the caramel attribute. Although a flavour impact was achieved with ornithine, it was less pronounced than with proline.

### Example 8

A flavour reaction was performed according to example 1, except that the flavour precursors were 50 mM fucose and 50 mM proline. Incorporation of 1.0 % of the fat-based flavour into chocolate resulted in an increase in the caramel and biscuit attributes.

### Example 9 (not part of the invention)

Cocoa butter can also be used as reaction medium. A flavour reaction was performed according to example 1 except that the reaction medium was cocoa butter. The flavour precursors were 50 mM rhamnose and 50 mM proline. Incorporation of 1.0 % of the fat-based flavour into chocolate resulted in an increase in the caramel and biscuit attributes. Again, the combination of proline/rhamnose in presence of 5% buffer, pH 8.0 was proven optimal to obtain high 4-hydroxy-2,5-dimethyl-3(2H)-furanone concentration. Although the 4-hydroxy-2,5-dimethyl-3(2H)-furanone concentration was high in these samples, the panellists perceived lower caramel as compared to chocolate samples prepared with reaction flavours in milk fat. Thus, milk fat seems to contribute to the flavour when incorporated in the final chocolate.

### Example 10 (not part of the invention)

A flavour reaction was performed according to example 3 except that the reaction medium was cocoa liquor. The flavour precursors were 50 mM rhamnose and 50 mM proline. Incorporation of 1.0 % of the fat-based flavour into chocolate resulted in an increase in the caramel and biscuit attributes.

### Example 11.

A flavour reaction was performed according to example 5 except that the reaction medium was lipase hydrolysed milk fat. Hydrolysis was performed with an immobilized lipase, Lipozyme RM IM from Novo Nordisk, Denmark. The flavour precursors were 50 mM proline and 100 mM fructose. Incorporation of 0.2 % of the fat-based flavour into chocolate resulted in an increase in the caramel, biscuit, and cheesy attributes.

## Claims

1. A process for the production of flavour concentrates comprising the addition of a mixture of flavour precursors comprising
(A) proline, ornithine or protein hydrolysate, and
(B) rhamnose, fructose or fucose,
to a fat-based medium being anhydrous milk fat or lipase hydrolysed milk fat, and heating the mixture to about 100-140°C for about 10-120 minutes.

2. A process as claimed in claim 1 wherein the mixture is heated to about 125°C for at least 30 minutes.

3. A process as claimed in claim 1 or 2 wherein the fat-based medium is heated and the flavour precursors are dispersed in the heated fat-based medium and reacted under reflux at 125 °C.

4. A process as claimed in claim 1 or 2 wherein the flavour precursors are dissolved in 1.5% alkaline water solution or buffer at pH 5.0 - 8.0 or 5-50% w/w potassium carbonate solution to form a flavour precursor solution or suspension.

5. A process as claimed in claim 4 wherein the flavour precursor solution or suspension is added at less than 1.5% w/w to the heated fat-based medium and reacted under reflux at 125°C.

6. A process as claimed in claim 4 wherein the flavour precursor solution or suspension is added from 1.5 to 5.0 % w/w to the heated fat-based medium, the reaction mixture is heated for 10-20 minutes from 100°C to 125 °C and reacted under reflux at 125 °C.

7. A process as claimed in claim 5 or 6 wherein the pH of the mixture before reaction is 8.0.

8. A process as claimed in any of the preceding claims using rhamnose and proline.

9. A process as claimed in claim 1 wherein rhamnose and proline are dissolved in 5% w/w buffer and added to the heated fat-based medium which was heated for at least 10 minutes from 100°C to 125°C and then reacted at 125°C under reflux for at least 10 minutes.

10. Use of a flavour concentrate obtainable according to any of the preceding claims in the manufacture of chocolate or compound chocolate or ice-cream coating in an amount of 0.01-5% by based on the weight of the total chocolate.

11. Use as claimed in claim 10 wherein the flavour concentrate is incorporated directly into the chocolate or compound chocolate.

12. Use as claimed in claim 10 or 11 wherein the flavour concentrate is added in combination with other flavours.

13. A chocolate product obtainable according to anyone of claims 10 to 12 with modified flavour characteristics comprising the flavour concentrate as claimed in any of the preceding claims.

14. A chocolate product as claimed in claim 13 which is milk chocolate, dark chocolate, white chocolate, compound coating, or ice-cream coatings.

## Patentansprüche

1. Verfahren zur Herstellung von Aromakonzentraten, das Hinzufügen einer Mischung von Aromaausgangsstoffen, umfassend
(A) Prolin, Ornithin oder Proteinhydrolysat und
(B) Rhamnose, Fruktose oder Fucose,
zu einem fettbasierten Medium, welches wasserfreies Milchfett oder durch Lipase hydrolysiertes Milchfett ist, und Erhitzen der Mischung auf etwa 100 - 140 °C etwa 10-120 Minuten lang umfasst.

2. Verfahren wie in Anspruch 1 beansprucht, wobei die Mischung auf etwa 125 °C zumindest 30 Minuten lang erhitzt wird.

3. Verfahren wie in Anspruch 1 oder 2 beansprucht, wobei das fettbasierte Medium erhitzt wird und die Aromaausgangsstoffe in dem erhitzten fettbasierten Medium dispergiert werden und unter Rückfluss bei 125 °C reagieren gelassen werden.

4. Verfahren wie in Anspruch 1 oder 2 beansprucht, wobei die Aromaausgangsstoffe in 1,5 %iger alkalischer Wasserlösung oder Puffer bei pH 5,0 - 8,0 oder in 5 - 50 Gew.-% Kaliumcarbonat-Lösung gelöst werden, um eine Aromaausgangsstoff-Lösung oder -Suspension zu bilden.

5. Verfahren wie in Anspruch 4 beansprucht, wobei die Aromaausgangsstoff-Lösung oder -Suspension mit weniger als 1,5 Gew.-% zu dem erhitzten fettbasierten Medium zugegeben wird und unter Rückfluss bei 125 °C reagieren gelassen wird.

6. Verfahren wie in Anspruch 4 beansprucht, wobei die Aromaausgangsstoff-Lösung oder -Suspension von 1,5 bis 5,0 Gew.-% zu dem erhitzten fettbasierten Medium zugegeben wird, das Reaktionsgemisch 10-20 Minuten lang von 100 °C bis 125 °C erhitzt wird und unter Rückfluss bei 125 °C reagieren gelassen wird.

7. Verfahren wie in Anspruch 5 oder 6 beansprucht, wobei der pH der Mischung vor der Reaktion bei 8,0 liegt.

8. Verfahren wie in einem der vorstehenden Ansprüche beansprucht unter Verwendung von Rhamnose und Prolin.

9. Verfahren wie in Anspruch 1 beansprucht, wobei Rhamnose und Prolin in einem 5 Gew.-%igen Puffer gelöst und zu dem erhitzten fettbasierten Medium zugegeben werden, das zumindest 10 Minuten lang von 100 °C bis 125 °C erhitzt wurde und dann bei 125 °C zumindest 10 Minuten lang unter Rückfluss reagieren gelassen wurde.

10. Verwendung eines Aromakonzentrats, das gemäß einem der vorstehenden Ansprüche erhältlich ist, bei der Herstellung von Schokolade oder einem Schokoladengemisch oder einer Eiskremkuvertüre in einer Menge von 0,01 - 5 Gew.-%, basierend auf dem Schokolade-Gesamtgewicht.

11. Verwendung wie in Anspruch 10 beansprucht, wobei das Aromakonzentrat direkt in die Schokolade oder die schokoladenhaltige Masse eingearbeitet wird.

12. Verwendung wie in Anspruch 10 oder 11 beansprucht, wobei das Aromakonzentrat in Kombination mit anderen Aromen zugegeben wird.

13. Schokoladenprodukt, erhältlich nach irgendeinem der Ansprüche 10 bis 12, mit modifizierten Aromaeigenschaften, das das Aromakonzentrat gemäß einem der vorstehenden Ansprüche umfasst.

14. Schokoladenprodukt wie in Anspruch 13 beansprucht, das Milchschokolade, dunkle Schokolade, weiße Schokolade, Schokoladengemisch-Kuvertüre oder Eiskremkuvertüren ist.

## Revendications

1. Procédé de production de concentrés d'arôme, comprenant l'addition d'un mélange de précurseurs d'arôme comprenant
(A) proline, ornithine ou hydrolysat de protéine, et
(B) rhamnose, fructose ou fucose,
à un milieu gras constitué de graisse de lait anhydre ou de graisse de lait hydrolysé par lipase, et le chauffage du mélange à environ 100-140°C pendant 10-120 minutes.

2. Procédé selon la revendication 1, dans lequel le mélange est chauffé à environ 125°C pendant au moins 30 minutes.

3. Procédé selon la revendication 1 ou 2, dans lequel le milieu gras est chauffé, et les précurseurs d'arôme sont dispersés dans le milieu gras chauffé, et mis à réagir sous reflux à 125°C.

4. Procédé selon la revendication 1 ou 2, dans lequel les précurseurs d'arôme sont dissous dans une solution alcaline aqueuse à 1,5%, ou un tampon à pH 5,0-8,0, ou une solution de carbonate de potassium à 5-50% p/p, pour former une solution ou une suspension de précurseurs d'arôme.

5. Procédé selon la revendication 4, dans lequel la solution ou suspension de précurseurs d'arôme est ajoutée en quantité inférieure à 1,5% p/p au milieu gras chauffé, et mise à réagir sous reflux à 125°C.

6. Procédé selon la revendication 4, dans lequel la solution ou suspension de précurseurs d'arôme est ajoutée en quantité de 1,5 à 5,0% p/p au milieu gras chauffé, le mélange réactionnel est chauffé pendant 10-20 minutes à 100°C à 125°C, et mis à réagir sous reflux à 125°C.

7. Procédé selon la revendication 5 ou 6, dans lequel le pH du mélange avant réaction est de 8,0.

8. Procédé selon l'une quelconque des revendications précédentes, utilisant le rhamnose et la proline.

9. Procédé selon la revendication 1, dans lequel le rhamnose et la proline sont dissous dans un tampon à 5% p/p, et ajoutés au milieu gras chauffé, qui est chauffé pendant au moins 10 minutes de 100°C à 125°C, et sont ensuite mis à réagir à 125°C sous reflux pendant au moins 10 minutes.

10. Utilisation d'un concentré d'arôme pouvant être obtenu selon l'une quelconque des revendications précédentes, dans la fabrication de chocolat ou de chocolat composé ou de nappage pour crème-glace, en quantité de 0,01-5%, sur base du poids du chocolat total.

11. Utilisation selon la revendication 10, dans laquelle le concentré d'arôme est incorporé directement dans le chocolat ou le chocolat composé.

12. Utilisation selon la revendication 10 ou 11, dans laquelle le concentré d'arôme est ajouté en combinaison avec d'autres arômes.

13. Produit de chocolat pouvant être obtenu selon l'une quelconque des revendications 10 à 12, avec des caractéristiques gustatives modifiées, comprenant le concentré d'arôme selon l'une quelconque des revendications précédentes.

14. Produit de chocolat selon la revendication 13, qui est du chocolat au lait, du chocolat noir, du chocolat blanc, un nappage composé ou des nappages pour crème-glace.
